# EUROPEAN PATENT APPLICATION

(11) **EP 2 477 415 A2**
(43) Date of publication of application: **18.07.2012**
(21) Application number: 11009218.6
(22) Date of filing: 21.11.2011
(51) Int. Cl.: H04N 21/854, H04N 21/858

(54) **Method and system of encoding and decoding media content**

(30) Priority: 21.11.2010 US 415840 P
(71) Applicant: Human Monitoring Ltd, 48800 Givat Hashlosha (IL)
(72) Inventor: Bakharov, Ilia, 55453 Kiryat-Ono (IL); Bogin, Ilya, Moscow 119121 (RU); Aviram, Rafi, 50200 Beit-Dagan (IL); Rabinowitz, Nitzan, 48580 Rosh HaAyin (IL); Dvir, Ira, 75779 Rishon-LeZion (IL); Gorstein, Vladimir, 44390 Kfar-Saba (IL)
(74) Representative: Dennemeyer & Associates S.A.

(57) **Abstract**

A method of generating a video container format file. The method comprises receiving a still image depicting a scene, receiving at least one object pertaining to the scene, encoding the still image as at least one video block of a video container format file, encoding the at least one object as data of the video container format file, and outputting the video container format file.

## Description

### FIELD AND BACKGROUND OF THE INVENTION

The present invention, in some embodiments thereof, relates to methods and systems of encoding and decoding multimedia data and, more particularly, but not exclusively, to methods and systems of encoding and decoding multimedia data in a container format.

The contemporary market of devices such as scanners, digital camcorders (video camera), digital cameras and camera equipped mobile handsets exhibits digital image capture capabilities with ever growing resolutions, ranging from a few mega pixels to hundreds mega pixels+. Many of the image capture devices are capable of recording video using open standard formats. Typically the video is recorded after being compressed to the suitable standard (e.g., H.264, WM9, DivX or VP6/8) using dedicated hardware or some Media Processor.

A recent trend is to adopt the H.264 standard for video as, for example, NTT-DoCoMo of Japan, who set the specifications of a new standard 3G-324M for mobile phones which comprises a H.264 capability, and DivX and VP that adapt their respective standards to H.264.

During the last years, systems and methods which use the benefits of video compression to provide high resolution images in low capacity have been developed. For example, International Patent Application Pub. No. WO 2008/081460 describes a method for compressing an image in a sequence of pseudo-video frames of a lower resolution than the image, comprising providing a video encoder fit for at least one of a spatial or temporal compression, providing an image, dividing the image into a plurality of partitions and encoding the partitions into pseudo-video frames by the encoder.

Another example is described in international Patent Application Pub. No. WO 2008/081458 describes a method for compressing an image as a sequence of video frames, comprising dividing the image into a plurality of tiles and compressing a tile, or part thereof, as a frame in the video sequence.

### SUMMARY OF THE INVENTION

According to some embodiments of the present invention there is provided a method of generating a video container format file. The method comprises receiving a still image depicting a scene, receiving at least one object pertaining to the scene, encoding the still image as at least one video block of a video container format file, encoding the at least one object as a non video data of the video container format file, and outputting the video container format file.

Optionally, the non video data comprises a plurality of non video blocks.

Optionally, encoding comprises encoding the at least one object as at least one of an audio data block, a metadata block, a text data block, a video block, and a graphic data block.

Optionally, encoding is performed by encoding at least one compressed frame.

Optionally, the at least one object comprises audio annotations pertaining to the scene.

Optionally, the at least one object comprises metadata information pertaining to the still image.

More optionally, the metadata information comprises a member of a group consisting of: at least part of Exchangeable image file format (EXIF) data, at least part of material exchange format (MXF) data, alpha compositing data, and expanded multiplayer (XMP) data.

Optionally, the at least one object comprises GPS coordinates indicative of the venue of the scene.

Optionally, the at least one object comprises at least one keyword describing the still image.

Optionally, the at least one object comprises at least one additional image associated with at least one region depicted in the still image.

Optionally, the at least one object comprises at least one video file associated with at least one region depicted in the still image.

Optionally, the at least one object comprises instructions for executing at least one of an applet and a widget, the instructions are associated with at least one region depicted in the still image.

Optionally, the at least one object comprises data extension pointer pointing to a memory address of descriptive data pertaining to the still image.

Optionally, the at least one object comprises at least one link associated with at least one region depicted in the still image and linking to at least one document pertaining to the at least one region.

More optionally, the document is another video file.

More optionally, the outputting comprises storing the video container format file as an information resource that can be accessed through a web browser and can be used for accessing other information resources.

Optionally, the encoding the at least one object comprises tagging at least one property of each of a plurality of regions in the still image.

Optionally, the encoding the at least one object comprises tagging at least one region depicted in the still image as associated with the at least one object.

More optionally, the at least one block and the plurality of non video blocks are stored in an mdat atom of the video container format file and indexed in a moov atom.

More optionally, the video container format file hosts a designated header in a metadata atom, the encoding the at least one object comprises updating an index table and tagging information in the designated header.

Optionally, the encoding the still image is performed at least spatially or temporally.

According to some embodiments of the present invention there is provided a method of decoding a video container format file. The method comprises receiving a media file storing a at least one video block in a video container format, using a video decoder of the video container format to decode a still image from the at least one video block, using another media decoder of the video container format to decode at least one object from non video data contained in the media file, synchronizing between the decoded still image and the at least one object, and outputting an output of the synchronizing.

Optionally, the other media decoder is an audio decoder of the video container format and the video data comprises a plurality of audio blocks.

More optionally, the at least one object comprises at least one audible annotation and the synchronizing comprises synchronizing the audible annotation with the still image.

More optionally, the outputting comprises using the at least one audible annotation to dub the still image.

Optionally, the media decoder is a text decoder of the video container format and the at least one object comprises at least one graphic object and at least one selected region in the still image, the synchronizing comprises embedding the at least one graphic object in the selected region.

More optionally, the embedding comprises linking between the at least one graphic object to at least one region depicted in the still image.

According to some embodiments of the present invention there is provided an apparatus for generating a video container format file. The apparatus comprises a video encoder configured to encode a still image as a at least one video block of a video container format file, a non video encoder for encoding at least one object as non video data of the video container format file, and a processor configured to synchronize between the non video data and the at least one video block in the video container format file.

According to some embodiments of the present invention there is provided a method of classifying video container format files. The method comprises receiving video container format file having a at least one video block, determining whether the at least one video block encode a video sequence having a plurality of video frames or a still image, and classifying the video container format file according to the determining.

Optionally, the method further comprises selecting at least one of a video file partition and a still image partition for storing the video container format file according to the classifying.

According to some embodiments of the present invention there is provided a method of sharing multimedia file with a plurality of users. The method comprises uploading a still image depicting a scene to a webpage, uploading at least one object pertaining to the scene to the webpage, forming a media file in a video container format which associates between at least one region of the still image and the at least one object, and sharing the media file with a plurality of users so as to allow each the user to display the still image and access the at least one object in response to a selection of the at least one region.

Unless otherwise defined, all technical and/or scientific terms used herein have the same meaning as commonly understood by one of ordinary skill in the art to which the invention pertains. Although methods and materials similar or equivalent to those described herein can be used in the practice or testing of embodiments of the invention, exemplary methods and/or materials are described below. In case of conflict, the patent specification, including definitions, will control. In addition, the materials, methods, and examples are illustrative only and are not intended to be necessarily limiting.

Implementation of the method and/or system of embodiments of the invention can involve performing or completing selected tasks manually, automatically, or a combination thereof. Moreover, according to actual instrumentation and equipment of embodiments of the method and/or system of the invention, several selected tasks could be implemented by hardware, by software or by firmware or by a combination thereof using an operating system.

For example, hardware for performing selected tasks according to embodiments of the invention could be implemented as a chip or a circuit. As software, selected tasks according to embodiments of the invention could be implemented as a plurality of software instructions being executed by a computer using any suitable operating system. In an exemplary embodiment of the invention, one or more tasks according to exemplary embodiments of method and/or system as described herein are performed by a data processor, such as a computing platform for executing a plurality of instructions. Optionally, the data processor includes a volatile memory for storing instructions and/or data and/or a non-volatile storage, for example, a magnetic hard-disk and/or removable media, for storing instructions and/or data. Optionally, a network connection is provided as well. A display and/or a user input device such as a keyboard or mouse are optionally provided as well.

### BRIEF DESCRIPTION OF THE DRAWINGS

Some embodiments of the invention are herein described, by way of example only, with reference to the accompanying drawings. With specific reference now to the drawings in detail, it is stressed that the particulars shown are by way of example and for purposes of illustrative discussion of embodiments of the invention. In this regard, the description taken with the drawings makes apparent to those skilled in the art how embodiments of the invention may be practiced.

In the drawings:
FIG. 1 is a flowchart of a method of generating a target media file, in a video container format, which stores a still image and one or more objects, according to some embodiments of the present invention;
FIG. 2 is a flowchart of an exemplary process for encoding the received still image as one or more video blocks of a target media file, according to some embodiments of the present invention;
FIG. 3 is a schematic illustration of an MP4 file, generated according to the method depicted in FIG. 1, according to some embodiments of the present invention;
FIG. 4 schematically depicts an exemplary header of an MP4 file, generated according to the method depicted in FIG. 1, according to some embodiments of the present invention;
FIG. 5 is a flowchart of an exemplary method of generating a media file encapsulating a still image and objects encoded in a video container format, according to some embodiments of the present invention;
FIG. 6A is a flowchart of an exemplary method of viewing a media file encapsulating a still image and objects encoded in a video container format, according to some embodiments of the present invention;
FIG. 6B is an exemplary image with a plurality of audio icons, each indicative of the presence of a tagged audio sequence associated with the respective regions, according to some embodiments of the present invention;
FIG. 7 is a flowchart of a method of decoding a target media file in a video container format, according to some embodiments of the present invention; and
FIG. 8 is a flowchart of a method for classifying video container format files, according to some embodiments of the present invention.

### DESCRIPTION OF EMBODIMENTS OF THE INVENTION

The present invention, in some embodiments thereof, relates to methods and systems of encoding and decoding multimedia data and, more particularly, but not exclusively, to methods and systems of encoding and decoding multimedia data in a container format.

According to some embodiments of the present invention there are provided methods and systems of generating, for example encoding, a media file that encapsulates, in a video container format, a still image, in one or more video blocks, and one or more objects which are related to the still image. According to some embodiments of the present invention there are provided methods and systems of decoding and/or classifying such media files. The encapsulated objects may include media objects, such as audio annotations, textual annotations, audio sequences, images and video objects. The encapsulated objects may include data pertaining to the still image, for example technical data, capturing time and venue, keywords, links, and descriptive data pertaining to the scene.

Optionally, the objects are associated with one or more regions of the still image, for example by tagging. Each object may be associated with a certain region. In such a manner, the media file, in the video container format, allows users, who view the still image, to select an element depicted in the still image and to receive visual, audible, and/or textual information which is associated therewith.

Optionally, such media file, in a video container format, may be connected to one or more other media files, in a video container format, by encapsulated objects which contain links and associated with regions in the respective still image.

According to some embodiments of the present invention there are provided methods and systems of sharing multimedia data with a plurality of users. The user may upload a still image depicting a scene to a certain network service, such as a social network website, such as Facebook™, a file sharing service, such as Google docs™ and/or an email service, such as Gmail™. The user further uploads one or more objects pertaining to the scene to the network service, for example objects as outlined above and described below. Then, the user associates between the still image, or one or more regions thereof, and the uploaded objects, for example by tagging. The association allows creating a media file, in a video container format, as outlined above and described below. This media file may be shared with a plurality of users so as to allow each one of them to access objects in response to a selection, for example by clicking or touching on a region in a display which displays the uploaded still image.

According to some embodiments of the present invention there are provided methods and systems of classifying media files in a video container format. As described below, media files in a video container format may be identified by classification modules as video files, for example by classification modules which are based on file extensions. The method described below allows determining whether a received media file encodes a video sequence having one or more video frames or a still image and classifying this media video according to this determination. In such a manner, media files which encode still images will not be classified or processed as video files though they are defined in a video container format.

Before explaining at least one embodiment of the invention in detail, it is to be understood that the invention is not necessarily limited in its application to the details of construction and the arrangement of the components and/or methods set forth in the following description and/or illustrated in the drawings and/or the Examples. The invention is capable of other embodiments or of being practiced or carried out in various ways.

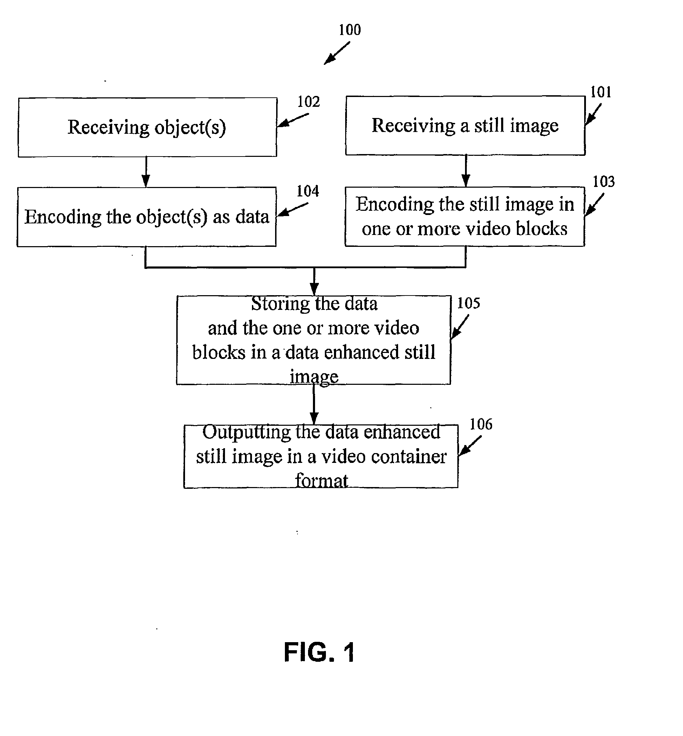

Reference is now made to FIG. 1, which is a flowchart 100 of a method of generating a target media file, in a video container format, which stores a still image and one or more objects that enrich the experience of a user watching the still image and/or the functionality of modules accessing and/or processing the target media file, according to some embodiments of the present invention. For brevity, such a target media file may be referred to herein as a video container format file or a data enhanced still image. As used herein, a video container format is a meta-file format whose specification describes how data, which may be video data and metadata, are stored. Exemplary video container formats include 3GP, which is based on the ISO base media file format, Advanced Systems Format (ASF), Audio Video Interleave (AVI), Microsoft Digital Video Recording (DVR-MS), Flash Video (FLV) (F4V), interchange file format (IFF), Matroska (MKV), Motion JPEG (M-JPEG), MJ2 - Motion JPEG 2000 file format, based on the ISO base media file format which is defined in MPEG-4 Part 12 and JPEG 2000 Part 12, QuickTime File Format, and moving picture experts group (MPEG) program stream, MPEG-2 transport stream (MPEG-TS), MP4, RM, NUT, MXF, GXF, ratDVD, SVI, VOB and DivX Media Format.

The method is optionally implemented by a client terminal, referred to as a device, such as a desktop computer, laptop, a Smartphone, a camera, an imager, and/or any device having a display and computing abilities.

The method allows using a video container format to allow an encapsulation of one or more objects and a related still image within a single media file, a single data enhanced still image. By encapsulating, and thereby associating, the one or more objects with a still image, the data enhanced still image may provide an interactive or variable user experience to a viewer and/or stimulate a number of her senses simultaneously. Moreover, such encapsulation allows a user to share additional information regarding the still image without using additional files or resources. In addition, this encapsulation increases the interoperability of various applications, such as social network applications, web browsers, file managers of an operating system, file mangers of image capturing devices, file sharing sites, search engines, and/or web-based email system services. A target media file, which is managed by any of these applications, may be searched for, identified, processed, tagged, and/or linked by any other of these applications in a low computational complexity, without conducting an image processing procedure to the still image. Such target media files may used by text based applications, video based applications, audio based applications and/or image based applications.

First, as shown at 101, a still image is received, for example captured, accessed to and/or selected. The still image may be any image that depicts a static scene, such as a color image, a black and white image a stereoscopic image and a grayscale image, in two or three dimensions. The image may be in various image formats, such as joint photographic experts group (JPEG), portable network graphics (PNG), tagged image file format (TIFF), digital negative (DNG) and vector formats. The still image may be received as an image file and/or directly from an image capturing source, such as a Charge Coupled Device (CCD) device or a Complementary Metal Oxide Semiconductor (CMOS) device. Alternatively, the image is obtained via an intermediate apparatus. Optionally, the intermediate apparatus comprises an imager, such as a CMOS imager, optionally as a part of the application specific integrated circuit (ASIC) or system on chip (SoC). In some embodiments of the invention, the apparatus comprises an image processing unit (IPU), for example to convert the image to a different format or to interface with the imager. Optionally, the IPU is a part of the ASIC or SoC. Optionally, the apparatus comprises other units such as control unit, peripheral interfaces, or interfacing with the imager or a video device.

In some embodiments of the invention, the image is pre-processed by operations such as sharpening, aligning, changing the image gamma (brightness proportions) or modifying the brightness or contrast. Optionally, the apparatus modifies the image format to a format suitable which is adapted to a certain video encoder, for example, from a Bayer color space, to YUV color space, for example 4:2:2 or 4:2:0 luminance color pixels cells. Optionally, the apparatus modifies the full image resolution to a suitable resolution that is adapted to a certain video encoder, for example, from 8MegaPixels to 1920x1080 or to 1280x720 pixels, or any other resolution representing the aspect ratio of the original image, which is supported by the video encoder. Optionally, the pre-process is performed by the processor using image processing programs or by a dedicated unit.

As shown at 102, one or more objects which are optionally related to the scene depicted in the received still image are received. The one or more objects may be generated automatically, for example by the image capturing device, selected and/or generated by an operator for the still image, and/or selected and/or generated by a computing unit, for example by an image processing module which analyzes the still image or a data analyzer which analyzes the respective image file.

Optionally, the one or more objects include indicative textual data for allowing search engines to identify the generated target media file in a word search, for example in response to a query. The indicative textual data may be used to identify people or objects, which are depicted in the still image. This data may be used by a social network tagging module, a searching and/or classification module of a device, such as a camera or a cellular phone, and image processing modules. , The indicative textual data may include location data that allows a navigation means or a location based application to use the still image to depict or visually describe a location in a map and/or to classify or search for images according to a venue.

Optionally, the one or more objects include technical information about the device, for example camera settings. This includes static information, such as the camera model and make, and information that varies with each image such as orientation (rotation), aperture, shutter speed, focal length, metering mode, and ISO speed information. Optionally, the one or more objects include temporal information above the depicted scene, for example the date and time of taking the image.

Optionally, the one or more objects include a thumbnail for previewing the image for example in a file manager, photo manipulation software, and/or a limited resources display. For example, the one or more objects may be defined according to an exchangeable image file format (EXIF) standard, material exchange format (MXF) standard, or any portion of an EXIF or MXF object.

Optionally, the one or more objects include one or more audio sequences, for example audible annotations which describe the imaged scene, audible tags which describes objects or elements in the imaged scene, a musical content to be played with the display of the still image, a recording made during and/or after the capturing of the still image, and/or an audible signature.

Optionally, the one or more objects include alpha compositing data, such as an alpha channel or any data indicative of a transparency level of some or all of the pixels of the still image.

Optionally, the one or more objects include links, such as uniform resource locators (URLs) or any pointer indicative of a document or information resource that is suitable for the World Wide Web and can be accessed through a web browser and displayed on a display of a stationary device or a mobile device. In such an embodiment, the object, which may be associated with a region of the still image, may allow a user which clicks or otherwise selects the region to be redirected to the linked document, optionally automatically. As used herein a region may be an area of a still image and/or an element depicted in a still image.

Optionally, the one or more objects include location information, such as global positioning system (GPS) coordinates of the venue at which the still image was captured. Such data may be included in the EXIF data of the camera, or provided as an independent tag.

Optionally, a data associated with the location information is automatically identified and added to the one or more objects. For example, a module for acquiring location based information is installed on a device implementing the method, for example an imaging device, such as a camera. The module accesses a database that associates between location information, such as GPS coordinates, and venues in their proximity. An example for such as a database is Google maps™, Wikihood™ or various transportation planners databases. Then, the module extracts the data or links, such as URLs, which are associated with the current location of the respective device. The extracted data and/or links are added, optionally together with the location information, to the one or more objects which are encapsulated in the video container format file. In such a manner, a still image that is taken in a certain location, such as a bar, a restaurant, a hotel, and/or a tourist venue, is stored with descriptive data, and/or links to such descriptive data, which are automatically extracted from a database, as described above. In another example, still image which is taken or otherwise inserted in a location, such as the Eiffel tower, is stored with links to a Wikipedia entry, links to image galleries which are related to the Eiffel tower, related points of interest and the like. Optionally, location based data, which is extracted as described above, is encoded as an audio sequence, for example by using a text to speech module, and added as an audio annotation or tag(s).

It should be noted that such objects generates a still file that is associated and linked to one or more WebPages or websites. In such am manner, a user who accesses the video container format file, which contains the still image, receives an infrastructure to access information thereabout. Optionally, such video container format files may automatically associated with one or more location based services, allowing a user who uses the location based services to watch respective still images in response to location based information input.

Optionally, the one or more objects include applets, such as outline applets, view applets, action bar applets, and editor applets, as well as other applets and widgets or any program which may be executed by a device presenting the still image. In such an embodiment, the object, which may be associated with a region of the still image, may allow a user which clicks or otherwise selects the region to execute a certain code in parallel to the display of the still image, and optionally to affect the displayed still image.

Optionally, the one or more objects include text tags related to the still image and/or to one or more regions thereof. For example, an object which includes text tags which describe objects in the image and a map associating each one of the text tags with respective coordinates is received.

Optionally, the one or more objects include one or more visual objects, such as video clips, graphic elements and/or additional still images. In such an embodiment, a visual object may be associated with an area in an image, for example with a region depicting a certain object. In such an embodiment, the visual object may depict the associated region with more details, for example in higher resolution, from different angles, in different point in time, taken using other imaging devices and the like, In such a manner, a still image which is provided with the ability to provide more visual information about various depicted regions may be formed. Visual objects, such as images and video sequences may be stored as additional video blocks, for example encoded in the mdat atom of an MP4 file.

As shown at 103, the received still image is encoded as one or more video blocks of a target media file in a video container format. The encoding is optionally performed by compressing the still image as one or more video blocks, which may be referred to as a sequence of groups of frames (GOP). The number of frames in a GOP is responsive to the capabilities of the encoding tool, for example the coder/decoder (codec) which is used in the process. Optionally, the number of frames in a GOP may vary, optionally by the equipment or tools setup or during operation. Exemplary methods for encoding by a compression of the still image in a video sequence are described, at least partly, in U.S. application No. 11/882,811 filed on August 6, 2007, entitled "COMPRESSING HIGH RESOLUTION IMAGES IN A LOW RESOLUTION VIDEO", U.S. application No. 12/003934 filed on March 1, 2008, entitled "Architecture for image compression in a video hardware", and in a PCT application attorney docket No. 42975 entitled "COMPRESSING HIGH RESOLUTION IMAGES IN A LOW RESOLUTION VIDEO", the disclosures of which are incorporated herein by reference. International Patent Applications Pub. numbers WO 2008/081460 and WO 2008/081458, which are incorporated herein by reference, describe methods, hardware and/or software which compress video frames spatially and/or temporally (video encoding), at least partially, according to a standard video compression scheme such as H.264, MPEG-1, MPEG-2, MPEG-4, digital video express (DivX), VP, quick time (QT), Windows Media (WM) protocol or VC scheme or other video standard scheme.

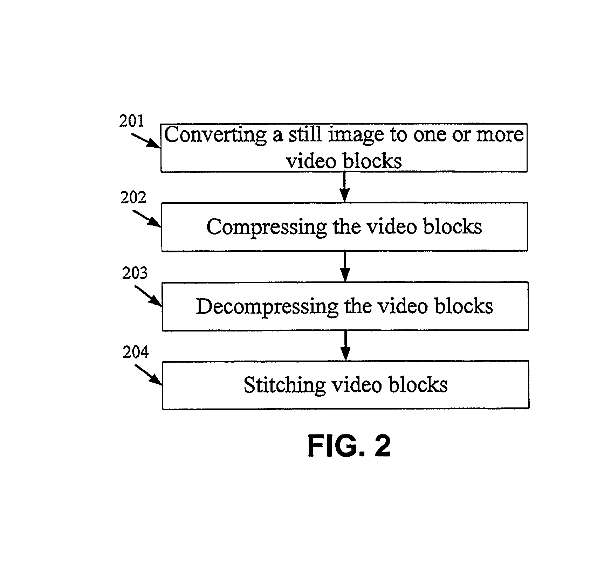

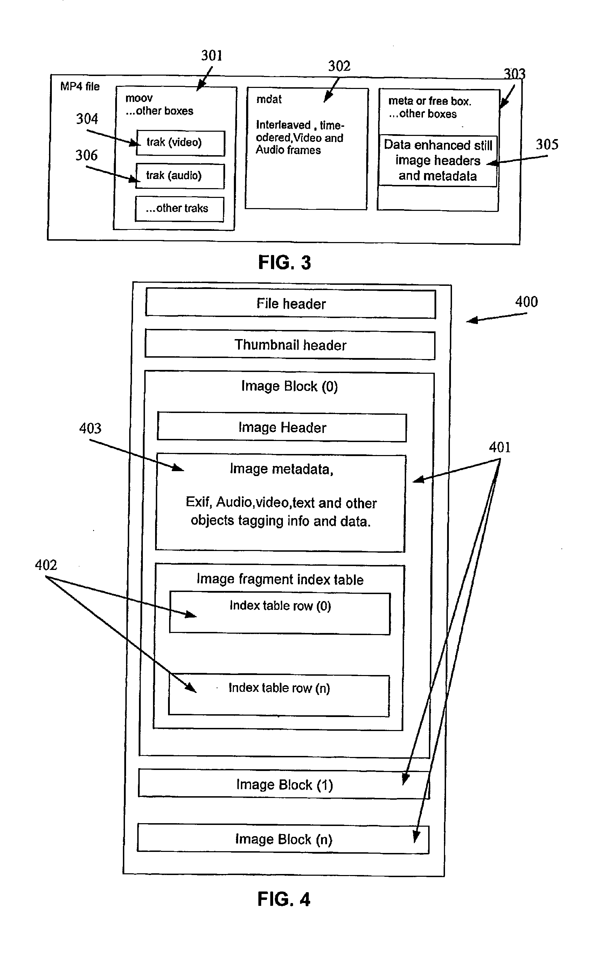

Reference is now made to FIG. 2, which is a flowchart of an exemplary process for encoding the received still image as one or more video blocks of a target media file, according to some embodiments of the present invention. First, as shown at 201, the still image is converted to video format, for example partitioned to a number of video blocks, which may be referred to as a sequence of tiles, optionally pre-designed sequence of tiles, and handling the resulted sequence as a video GOP. Such a partition may be considered as a conversion to a video object. For example, as described in U.S. application No. 11/882,811 filed on August 6, 2007, which is incorporated herein by reference. Alternatively, the still image may be converted to I, namely one tile, of a video sequence consisting one frame only. Then, such shown at 202, the one or more video blocks are compressed by using a known video compression process, such as MPEG compression. This allows, as shown at 203, decompressing the compressed video blocks and, as shown at 204, stitching it into a still image, for example according to designated instructions which are stored in the a designated header. For example, FIG. 3 depicts a schematic illustration of an MP4 file, generated according to the method depicted in FIG. 1, which has moov atom 301, mdat atom 302 and a free atom 303 which hosts such a designated header. As used herein the free atom 303 may include other all the non mdat and non moov storage space. In such an embodiment, the video blocks are stored in the video trak 304 of the mdat atom and the instructions for stitching them are stored in a header 305, which may be referred to herein as data enhanced still image header, in the free atom and/or in the moov atom as known in the art. For example, reference is also made to FIG. 4 schematically depicts an exemplary header 400 of an MP4 file, generated according to the method depicted in FIG. 1, which includes one or more image block records 401, each having an image fragment index table 401 with stitching instructions for the respective video block. Each image fragment index table includes a plurality of records 402, each for a different row in the video block. Each record defines the number, the offset, and the length of the respective row; see for example International Patent Publication Number WO 2008/081458, which is incorporated herein by reference.

Reference is now also made, once again, to FIG. 1. As shown at 104, the one or more objects are now encoded into the target media file in the same video container format which is used to encode the still image.

Optionally, the encoding of the one or more objects may be done as one or more non video blocks, such as audio blocks 306. For example, if the one or more objects include one or more audio sequences, as defined above, they are encoded, optionally by an audio encoder to one or more audio blocks. For example, when the video container format is MP4, the audio blocks are stored in the audio trak of the mdat atom and the instructions for stitching them are stored in the header 305 in the free atom, for example in the image metadata 403 and/or in the moov atom as known in the art. In such an embodiment, different audio sequences may be associated with different segments of the still image, allowing the playing thereof upon user selection, for example in response to the placing of a pointer on top of the respective segment, touching it when it is presented on a touch screen and the like. In use, per given still image, one or more objects, such as audio files, may be played according to tagging association to the still image or a region thereof according to information stored in the image metadata, for example as shown at 403.

Optionally, the encoding of the one or more objects includes updating the image metadata, for example as shown at 403. For example, EXIF information, MXF information, descriptive keywords or index for facilitating search, tagging, location based data and/or temporal data may be stored in the image metadata, for example as shown at 403. Optionally, the image metadata, for example as shown at 403, includes the following objects: EXIF object for containing EXIF data, AlfaChannel object for containing alpha compositing data, expanded multiplayer (XMP) object for containing XMP data, AudioTag object, for associating audio sequences, optionally stored in the audio trak 306, with the still image, VideoTag object, for tagging regions in the still image or the still image with video files, TextTag object for tagging regions in the still image or the still image with text, Picture Tag object for tagging regions in the still image or the still image with other images and DataExtension object which points to an offset where the extended data for the still image located.

Optionally, a data structure which is indicative of the level, presence or absence of some or all of the objects in a certain region in the still image is used. Such data structures may be used to map all or some of the regions in the still image. The data structure optionally defines a region in the still image, for example by coordinates, a track number, and optionally an alpha channel value, such as transparency level, a region related text string, a region related image file, a region related image video file, a region related audio file, and/or the like.

It should be noted that the video container format, which is used when the object includes one or more audio sequences, enables audio and video synchronization. In such embodiments, the format of the video and audio CODECS to be used may vary according to the container's support. For example, an MPEG-2 TS container may be used to combine H.264 or MPEG-2 video content with AAC or AC3, among other combinations.

The encoding and decoding of the one or more objects and the still image may be done by software and/or hardware modules which are integrated into existing systems and/or software and/or hardware modules which are designated for handling, for example decoding and/or encoding, media files, as described above.

As used herein, encoding may include a compression process and decoding may include a decompression process. Examples for existing systems, which may decode and present at least a single video object and an object such as an audio object, optionally without any adjustment, are Facebook™ video viewer, QuickTime™, Real™ player, KMplayer™, VLC™ player, GOM™ player and other video players, digital photo viewers or frameworks, and/or devices equipped with the a video container format encoder and/or decoder, such as MP4 container, AMR, AMR-WB, AMR-WB+ or AAC audio CODEC, and H.264 video CODEC. These players may present one or more video blocks as a video stream. Optionally, a stitching block is placed to receive outputs of an existing decoder, arranges the one or more video blocks as a still image, and forwards the arrangement to a renderer.

As shown at 105, the encoded still image and the one or more encoded objects are stored, encapsulated, in a common media file that is defined by a certain video container format as described above. As shown at 106, the common media file is now outputted, for example forwarded to display, stored in a memory, uploaded for storage, such as a web server, transmitted over a communication network and/or the like.

Optionally, the encoding of objects is done according to the standard of the respective video container format. In such embodiments, where the common media file is defined by a common video container format, such as MP4, existing software modules and devices may present and process at least some of the encapsulated objects and the encapsulated still image without any adjustment or update. The common media file, which is defined by a common video container format, complies with respective resolution limitations.

According to some embodiments of the present invention, a media file, in a video container format, which stores a still image and one or more objects, optionally generated according to FIG. 1, is used as a content container in a document or information resource that is suitable for the World Wide Web (WWW) and/or private local area networks and can be accessed through a web browser and displayed on a display of a stationary device or a mobile device. This media file may be embedded in an HTML or XHTML format page. As described above, the media file may include objects, such as links, which provide navigation to other document or information resource that can be accessed through a web browser. In such a manner, such media files may be linked to one another, allowing forming a website, or a cluster of documents, which are accessible via and suitable for the WWW and/or private local area networks. For example, a still image of such a media file may be set to be presented in a page size on a presentation screen of a web browser. A number of different regions in this still image are associated with different objects, for example as described above. When the user clicks, performs a touch event, or otherwise selects one of the regions, she is presented with visual content from the respective object, such as a video content, image content or textual content, for example as described above, executes a code of an applet or a widget from an object, and/or redirected to another media file or webpage according to a link in the respective object. In such a manner, the user surfs between different documents using media files. The media files may be retrieved from a local computer or from a remote web server. The web server may restrict access only to a private network, e.g. a corporate intranet, or it may publish pages on the WWW. Optionally, the media files are requested and served from web servers using hypertext Transfer Protocol (HTTP) messages or other messages. Optionally, a collection of such media files, which are related to one another, are addressed by links having a common prefix, as web pages of a website. These media files may be hosted on a common web server, accessible via a network such as the Internet or a private local area network. It should be note that when such a collection of media files are used, data may be easily compressed according to the video container formats. This reduces that mount of transferred data and therefore reduces the needed computational power at the client terminal which hosts the web browser how presents the media files. Reduction in computational power reduces energy consumption. Using objects embedded in media files, such as MP4, is transparent to the user, for example web browsers which support HTML5 and H.264, such as chrome™ and Safari™.

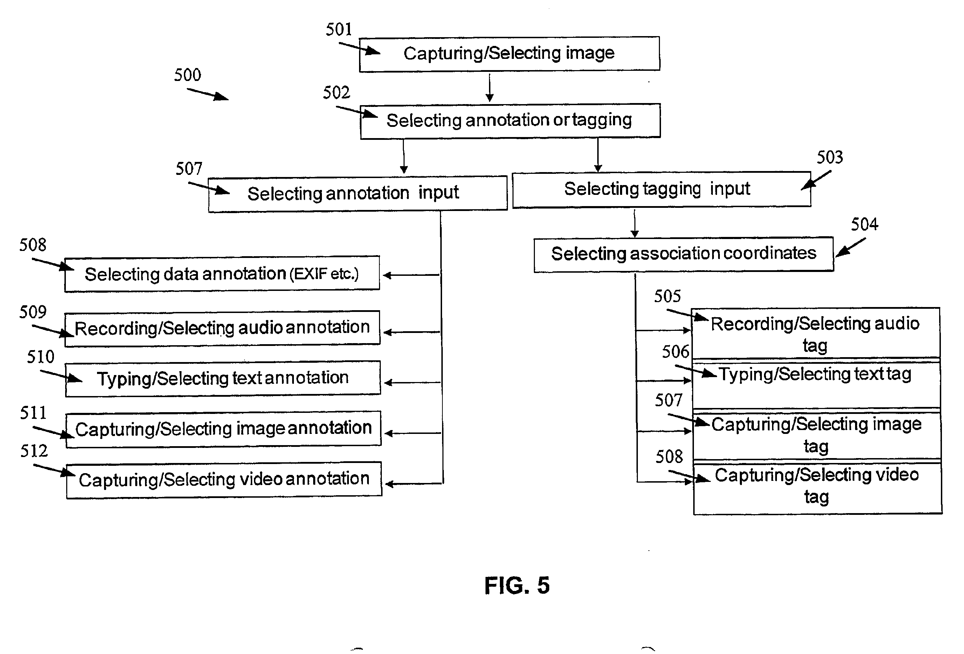

Reference is now made to FIG. 5, which is a flowchart of an exemplary method 500 of generating a data enhanced still image, according to some embodiments of the present invention. First, as shown at 501, a still image is selected, for example by file manager application and/or captured, for example using an imaging device, such as a CMOS based device and a CCD based device. For example, when a user captures an image using a camera or a cellular device, one of the options for storing the image is in a video container format file that encapsulates a still image and one or more objects which are added by the user and/or automatically, for example by the camera. When the user selects such an option, the captured still image is received for generating such a data enhanced still image. The received still image may be encoded as a video object, for example partitioned to a number of video blocks from various formats such as JPEG and RAW.

Then, as shown at 502, the operator selects whether to tag the still image or regions thereof or to associate annotations therewith. When tagging is selected, as shown at 503, the user determines the tag type, for example a region tag indicative of a region in the still image, a general tag, and/or a temporal tag indicative of the period during the presentation of the still image. If a region tag is selected, the coordinates are now set, as shown at 504. The coordinates may be set using a pointing device and/or by touching a respective area on a touch screen. If a temporal tag is selected, the period during the display is selected, for example using a designated graphical user interface (GUI). Now, the tag is inputted, for example captured, typed, and/or recorded. For example, the tag may be an audio tag 505, a text tag 506, an image tag 507, and a video tag 508. The tag selection process may be instructed by a structured GUI. Regions may be selected by a selection tool that allows the user to mark areas in the still image.

When annotation is selected, as shown at 507, the user inputs, for example selects, types, and/or captures the respective annotation content. For example, the annotation content may be informative 508, audible 509, textual 510, and/or visual, for example an image 511 and/or a video 512. The process may be facilitated by a GUI that is provided to the user, either as a standalone program or as an add-in of existing player and/or as part of a user interface of an imaging device or a data management and/or processing device. Optionally, the inputs of the operator, namely the objects, such as the tags and the annotations, and the still image are encapsulated to form a single multilayer, optionally interactive, media file in a video container format, such as MP4, as depicted in FIG. 1 and described above. The media file may be uploaded to a webpage, such as a profile page of a social network, sent as an email, or stored in a local and/or remote database.

The process depicted in FIG. 5 may be used to allow a user to share a multimedia file, such as the aforementioned data enhance still image, with a plurality of users, for example friends in a social network. In such an embodiment, the user selects a still image depicted a scene to be uploaded and one or more objects pertaining to the scene, for example type text, select an image and/or a video, and/or associate a link. Now, the user associates between the one or more objects and the still image, for example by tagging one or more regions in the still image. This image is now shared with the user's friends (and/or any user) at the social network service so as to allow each one of the friends to access the object in response to a selection of the respective region. For example when the user associate a descriptive text with a region depicting an element or a person, his friends may access the text by a touch event or a click on the respective region.

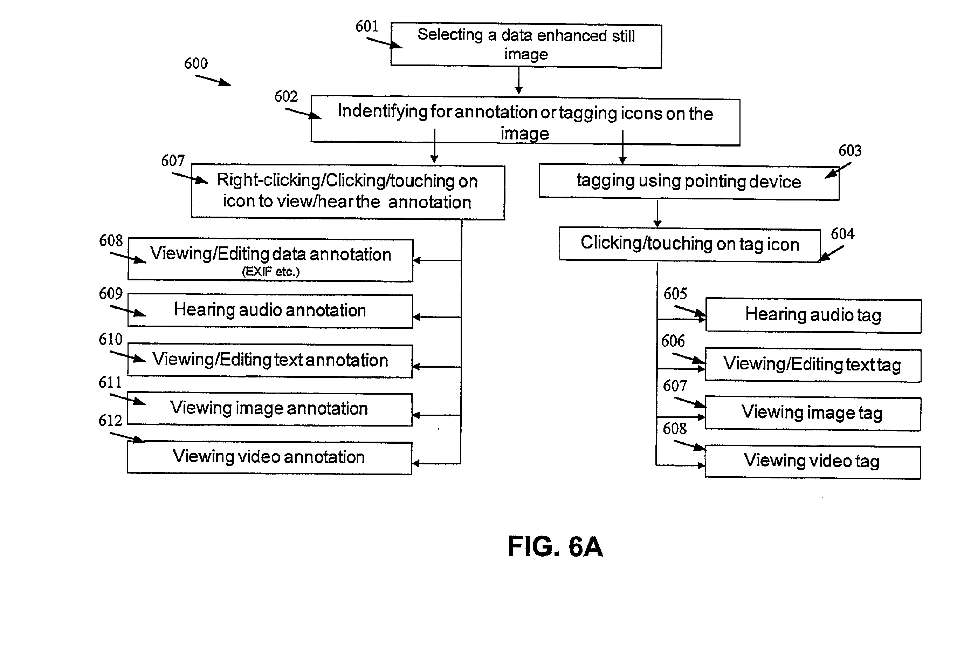

Reference is now made to FIG. 6A, which is a flowchart of an exemplary method 600 of viewing a multilayer, optionally interactive, media file encapsulating a still image and objects encoded in a video container format, for example as depicted in FIG. 1 and described above, according to some embodiments of the present invention. First, as shown at 601, a data enhanced still image is selected, for example using a GUI or a designated UI. For example, the selected data enhanced still image may be presented in a webpage, such as a social network page, a portal, a file management GUI, and/or a sharing page. In another example, the data enhanced still image is received in an email, a multimedia messaging service (MMS) or an instant messaging service. The selection is made, for example using a pointer of a pointing device or by a touch event on a touch screen. The selected still image is presented to the operator.

Now, as shown at 602, the user selects whether she what to present, for example display or play, a tag or an annotation. Such a selection may be made using a button of a GUI, for example by selecting a tag icon or an annotation icon. When, for example as shown at 603, a tag is selected for presentation, for example by allowing the user to place a pointer of a pointing device on a tagged region of the still image. Then, the pointed tag is clicked or touched, as shown at 604, and user can listen to audio content 605, view and/or edit textual content 606, view tagged images 607, and/or view tagged videos 608.

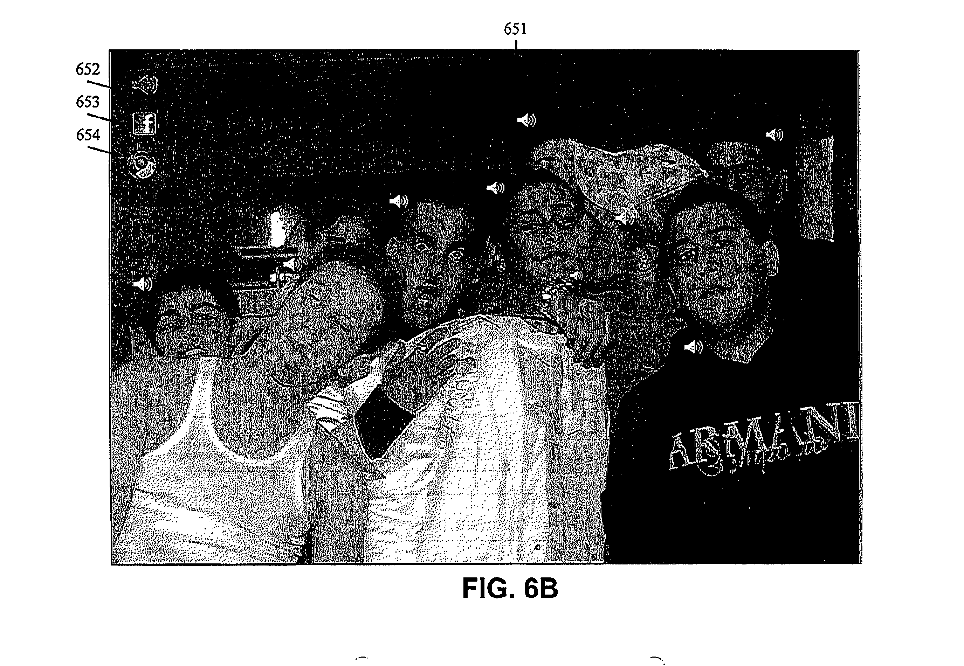

The tags may be presented to the user upon demand and/or automatically, for example with the display of the still image. The tags may be presented as icons, a counter around the tagged area, and/or as an emphasis of the tagged regions. For example, FIG. 6B is an exemplary image with a plurality of audio icons, each, such as 651, indicative of the presence of a tagged audio sequence associated with the respective regions. In this example, a different audio sequence that includes a recording emulating a monolog of each one of the imaged persons is associated with a different audio tag.

Alternatively, as shown at 607, the user may select an annotation or a link, for example by a right click, a click, and/or a touch event on a respective icon. For example FIG. 6B depicts an image with icons to an audio annotation 652, a link to respective social network webpage 653, and a link to a webpage which include information about the venue of the image 654.

When, annotation is selected, the user may access data annotation 608, listen to audio content 609, view and/or edit textual content 610, view image annotation 611, and/or view video annotation 612. The presentation of the still image is enabled by decoding the data enhanced still image as described above, for example as described in U.S. application No. 11/882,811 filed on August 6, 2007, which is incorporated herein by reference. The processing and/or presenting of the aforementioned objects is enabled by decoding the data enhanced still image as described above, for example using data stored in the header depicted in FIGs. 3 and 4 and described above.

Optionally, the one or more objects are presented as a preview for the still image, for example when the respective data enhanced still image is presented as a thumbnail in an image gallery. For example, of the data enhanced still image includes audible objects, such as audio annotations or tags; these audible objects are played when the user places the pointer of a pointing device on a respective thumbnail in an image gallery. In such a manner, the user can listen to audio information while viewing a number of thumbnails for deciding whether to enlarge the still image or not.

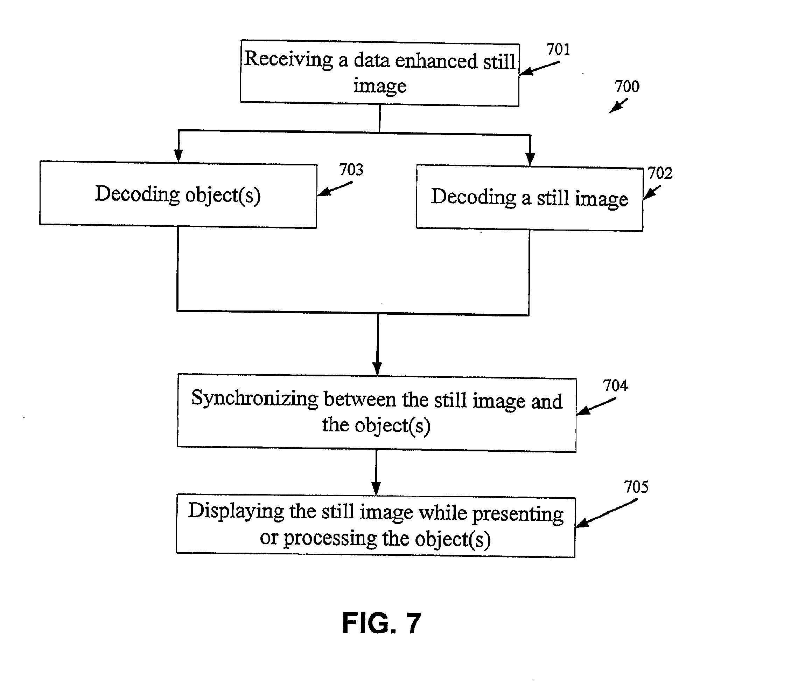

Reference is now made to FIG. 7, which is a flowchart of a method 700 of decoding a target media file in a video container format, such as the aforementioned data enhanced still image, according to some embodiments of the present invention. First, as shown at 701 a media file in a video container format, such as a data enhanced still image is received. Then, as shown at 702, a video decoder of the video container format is used to decode the still image from one or more video blocks contained in said the received media file. For example, when the video container format is MP4, the video decoder is set to decode the still image from the mdat atom, for example as described in U.S. application No. 11/882,811 filed on August 6, 2007, which is incorporated herein by reference. Then, as shown at 703, another media decoder, which is set according to the video container format, is used to decode one or more objects from data contained in the media file, for example non video data or as another video sequence. For example, an audio decoder may be used for extracting and reconstructing one or more audio sequences which are stored in the received media file. Any of the aforementioned objects may be extracted from the media file, for example the EXIF object, the AlfaChannel object, the XMP object, the AudioTag object, the VideoTag object the TextTag object the Picture Tag object and/or the DataExtension object. The decoding may be performed by respective decoders, for example a text decoder, a data decoder, a graphic decoder and the like. The decoding process is clear in light of the afore-described encoding.

Now, the object(s) and the still image are synchronized, as shown at 704. For example, the synchronizing includes associating or linking coordinates of the still images with respective tags, for example according to the instructions in the data structures stored in the image metadata, for example as shown at 403. The synchronization is performed in the spatial dimension, for example associating regions in the images with certain objects, and in the temporal dimension, for example associating periods in the time of presenting the still image with certain objects. The synchronization may be performed automatically as an outcome of the aforementioned decoding and/or as a separate stage.

Now, as shown at 705, the synchronized decoded still image and objects are outputted, for example as a data enhanced still image that allow the user to simultaneously watch the still image and additional data .

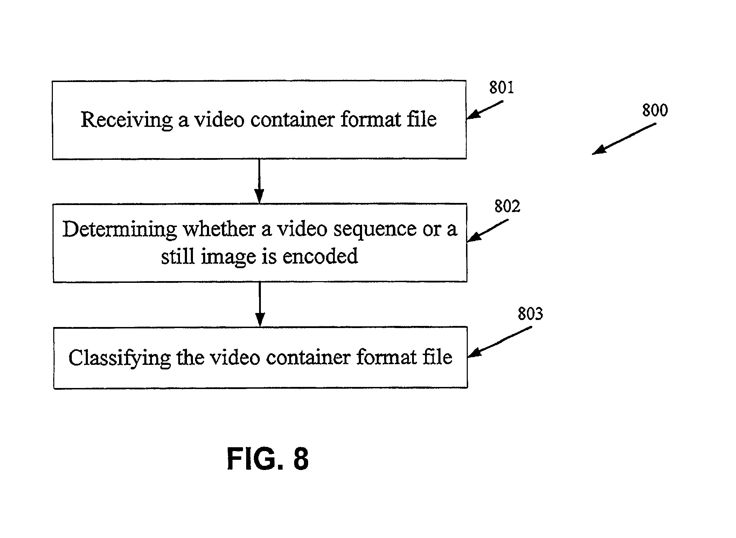

As described above, the data enhanced still images are stored in video format container formats. Such formats are identified by classification modules such as video files, for example by classification modules which are based on file extensions. Reference is now made to FIG. 8, which depicts a flowchart of a method 800 for classifying video container format files, according to some embodiments of the present invention. This method 800 facilitates web based services and file managers to differentiate between data enhanced still images and video files. This method 800 also facilitates file mangers to classify data enhanced still images automatically. Such a method may allow web based services, which allow still image sharing, such as Facebook™ to classify uploaded data enhanced still image as a still image and not as a video.

First, as shown at 801, a video container format file having one or more video blocks is received. Then, as shown at 802, the video container format file is analyzed to determine whether the one or more video blocks encode a video sequence having one or more video frames or a still image. Optionally, the analysis is made by identifying the presence or absence of a format identifier, such as the aforementioned designated header, marked as 305. Optionally, the analysis is made by decoding the single or the one or more video blocks to determine whether they include data extracted from a still image. The decoding may be preformed as described in U.S. application No. 11/882,811 filed on August 6, 2007. The determination may be performed by analyzing an output image of the decoding.

Now, as shown at 803, the video container format file is classified according to the determination. For example, in a social network service, such as Facebook™, differentiates a video from a still image by using a different file extension. For example *.mp4 is used for video and a still image contained in a video container file is stored in an image having the file extension *.hpx.

It is expected that during the life of a patent maturing from this application many relevant systems and methods will be developed and the scope of the term encoder, decoder, CODEC, network and imaging device is intended to include all such new technologies *a priori.*

As used herein the term "about" refers to ± 10 %.

The terms "comprises", "comprising", "includes", "including", "having" and their conjugates mean "including but not limited to". This term encompasses the terms "consisting of' and "consisting essentially of'.

The phrase "consisting essentially of" means that the composition or method may include additional ingredients and/or steps, but only if the additional ingredients and/or steps do not materially alter the basic and novel characteristics of the claimed composition or method.

As used herein, the singular form "a", "an" and "the" include plural references unless the context clearly dictates otherwise. For example, the term "a compound" or "at least one compound" may include a plurality of compounds, including mixtures thereof.

The word "exemplary" is used herein to mean "serving as an example, instance or illustration". Any embodiment described as "exemplary" is not necessarily to be construed as preferred or advantageous over other embodiments and/or to exclude the incorporation of features from other embodiments.

The word "optionally" is used herein to mean "is provided in some embodiments and not provided in other embodiments". Any particular embodiment of the invention may include a plurality of "optional" features unless such features conflict.

The term "one or more video blocks" as used herein means any number of video blocks ranging from a single video block to any number of video blocks.

Throughout this application, various embodiments of this invention may be presented in a range format. It should be understood that the description in range format is merely for convenience and brevity and should not be construed as an inflexible limitation on the scope of the invention. Accordingly, the description of a range should be considered to have specifically disclosed all the possible subranges as well as individual numerical values within that range. For example, description of a range such as from 1 to 6 should be considered to have specifically disclosed subranges such as from 1 to 3, from 1 to 4, from 1 to 5, from 2 to 4, from 2 to 6, from 3 to 6 etc., as well as individual numbers within that range, for example, 1, 2, 3, 4, 5, and 6. This applies regardless of the breadth of the range.

Whenever a numerical range is indicated herein, it is meant to include any cited numeral (fractional or integral) within the indicated range. The phrases "ranging/ranges between" a first indicate number and a second indicate number and "ranging/ranges from" a first indicate number "to" a second indicate number are used herein interchangeably and are meant to include the first and second indicated numbers and all the fractional and integral numerals therebetween.

It is appreciated that certain features of the invention, which are, for clarity, described in the context of separate embodiments, may also be provided in combination in a single embodiment. Conversely, various features of the invention, which are, for brevity, described in the context of a single embodiment, may also be provided separately or in any suitable subcombination or as suitable in any other described embodiment of the invention. Certain features described in the context of various embodiments are not to be considered essential features of those embodiments, unless the embodiment is inoperative without those elements.

Although the invention has been described in conjunction with specific embodiments thereof, it is evident that many alternatives, modifications and variations will be apparent to those skilled in the art. Accordingly, it is intended to embrace all such alternatives, modifications and variations that fall within the spirit and broad scope of the appended claims.

All publications, patents and patent applications mentioned in this specification are herein incorporated in their entirety by reference into the specification, to the same extent as if each individual publication, patent or patent application was specifically and individually indicated to be incorporated herein by reference. In addition, citation or identification of any reference in this application shall not be construed as an admission that such reference is available as prior art to the present invention. To the extent that section headings are used, they should not be construed as necessarily limiting.

## Claims

1. A method of generating a video container format file, comprising:
receiving a still image depicting a scene;
receiving at least one object pertaining to said scene;
encoding said still image as at least one video block of a video container format file;
encoding said at least one object as a non video data of said video container format file; and
outputting said video container format file.

2. The method of claim 1, wherein said non video data comprises a plurality of non video blocks.

3. The method according to any of the previous claims, wherein said at least one object comprises metadata information pertaining to said still image, wherein said metadata information comprises a member of a group consisting of: at least part of Exchangeable image file format (EXIF) data, at least part of material exchange format (MXF) data, alpha compositing data, and expanded multiplayer (XMP) data.

4. The method according to any of the previous claims, wherein said at least one object comprises at least one member of a group consisting of GPS coordinates indicative of the venue of said scene, at least one keyword describing said still image, at least one additional image associated with at least one region depicted in said still image, and at least one video file associated with at least one region depicted in said still image.

5. The method according to any of the previous claims, wherein said at least one object comprises instructions for executing at least one of an applet and a widget, said instructions are associated with at least one region depicted in said still image.

6. The method according to any of the previous claims, wherein said at least one object comprises at least one of data extension pointer pointing to a memory address of descriptive data pertaining to said still image and least one link associated with at least one region depicted in said still image and linking to at least one document pertaining to said at least one region.

7. The method according to any of the previous claims, wherein said outputting comprises storing said video container format file as an information resource that can be accessed through a web browser and can be used for accessing other information resources.

8. The method according to any of the previous claims, wherein said encoding said at least one object comprises tagging a member of a group consisting of at least one property of each of a plurality of regions in said still image and at least one region depicted in said still image as associated with said at least one object.

9. The method according to any of the previous claims, wherein said at least one block and said non video data are stored in an mdat atom of said video container format file and indexed in a moov atom.

10. The method of claim 9, wherein said video container format file hosts a designated header in a metadata atom, said encoding said at least one object comprises updating an index table and tagging information in said designated header.

11. A method of decoding a video container format file, comprising:
receiving a media file storing a at least one video block in a video container format;
using a video decoder of said video container format to decode a still image from said at least one video block;
using another media decoder of said video container format to decode at least one object from non video data contained in said media file;
synchronizing between said decoded still image and said at least one object;
and
outputting an output of said synchronizing.

12. The method of claim 11, wherein said another media decoder is an audio decoder of said video container format and said video data comprises a plurality of audio blocks; wherein said at least one object comprises at least one audible annotation and said synchronizing comprises synchronizing said audible annotation with said still image; wherein said outputting comprises using said at least one audible annotation to dub said still image.

13. The method of claim 11, wherein said media decoder is a text decoder of said video container format and said at least one object comprises at least one graphic object and at least one selected region in said still image, said synchronizing comprises embedding said at least one graphic object in said selected region; wherein said embedding comprises linking between said at least one graphic object to at least one region depicted in said still image.

14. An apparatus for generating a video container format file, comprising:
a video encoder configured to encode a still image as a at least one video block of a video container format file;
a non video encoder for encoding at least one object as non video data of said video container format file; and
a processor configured to synchronize between said non video data and said at least one video block in said video container format file.

15. A method of sharing multimedia file with a plurality of users, comprising:
uploading a still image depicting a scene to a webpage;
uploading at least one object pertaining to said scene to said webpage;
forming a media file in a video container format which associates between at least one region of said still image and said at least one object; and
sharing said media file with a plurality of users so as to allow each said user to display said still image and access said at least one object in response to a selection of said at least one region.
